Europäisches Patentamt

European Patent Office

Office européen des brevets

(11) Publication number: **0 474 483 A2**

# EUROPEAN PATENT APPLICATION

(21) Application number: **91308111.3**

(22) Date of filing: **04.09.91**

(51) Int. Cl.⁵: **H04N 5/335, H04N 5/30**

(30) Priority: **06.09.90 JP 236327/90**

(43) Date of publication of application:
**11.03.92 Bulletin 92/11**

(84) Designated Contracting States:
**DE FR GB**

(71) Applicant: **FUJITSU LIMITED**
**1015, Kamikodanaka Nakahara-ku**
**Kawasaki-shi Kanagawa 211 (JP)**

(72) Inventor: **Ozaki, Tohru**
**Dai-3 Mezon Tachibana 303, 723, shibokuchi**
**Takatsu-ku, Kawasaki-shi, Kanagawa 213 (JP)**
Inventor: **Naoi, Satoshi**
**Gurin-Kopo Okurayama B709, 931-1**
**Mamedo-cho**
**Kohoku-ku, Yokohama-shi, Kanagawa 222**
**(JP)**
Inventor: **Sasaki, Shigeru**
**Nakayama Paku-Homuzu 408, 330-3,**
**Nakayama-cho**
**Midori-ku, Yokohama-shi, Kanagawa 226 (JP)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

(54) **High speed image pickup system.**

(57) A high frequency image processing system comprising: TV cameras (31 to 34) each picking up an image at a relatively low frequency, and each having an electronic shutter, and an external terminal; a circuit (6) for generating synchronization signals having the phases different to each other, the synchronization signals being supplied to the external terminals of the TV cameras (31 to 34); and an image processing unit (4) for processing the signals output from the TV cameras (31 to 34); the electronic shutters in the TV cameras (31 to 34) being released, at different times in response to the synchronization signals, to pick up the image; and the image processing unit (4) processing, at different times in response to the synchronization signals, the pickup image signals; whereby, after processing the pickup image signals, the processed pickup image signals as a whole are substantially the same as a signal processed at a relatively high frequency higher than the relatively low frequency.

EP 0 474 483 A2

Fig. 3

IMAGE PROCESSING UNIT

HOST COMPUTER INTERFACE

LENS

LIGHT DISTRIBUTING UNIT

TV CAMERA MODULE (31)
TV CAMERA MODULE (32)
TV CAMERA MODULE (33)
TV CAMERA MODULE (34)

R G B SYNC

FEATURE EXTRACTING CIRCUIT

POSITION CALCULATING CIRCUIT (421, 422, 423, 424)

411, 412, 413, 414

SYNCHRONOUS SIGNAL GENERATING CIRCUIT

SYNC GENERATING CIRCUIT (61)

1/4 FIELD DELAY CIRCUIT (621)
1/4 FIELD DELAY CIRCUIT (622)
1/4 FIELD DELAY CIRCUIT (623)

NTSC OUTPUT FROM 31
NTSC OUTPUT FROM 32
NTSC OUTPUT FROM 33
NTSC OUTPUT FROM 34

SELECTOR (7)

TV MONITOR (8)

## BACKGROUND OF THE INVENTION

### (1) Field of the Invention

The present invention relates to a high frequency image processing system, and more particularly, to an image processing system for processing an image at a field frequency or a frame frequency by using a plurality of conventional TV camera modules, the frequency being n times the scanning frequency of each of the conventional TV camera modules, where n equals the number of TV camera modules.

Among the application fields for processing an image at a high frequency, there is known, for example, a motion analyzing system used, in particular for processing an orbit of a body moving at a high speed, such as a golf club. This analyzing of the movement of a golf club, for example, requires a time division resolution at two or three times the speed of a 1/60 seconds/field.

Also known is a collision experiment analyzing system, for an application of the high frequency image processing system to the study of the influence of a collision between cars on the cars themselves and on human bodies sitting in the cars. This system requires a time division resolution at five times the speed of a 1/60 seconds/field.

Accordingly, there is a need for a high frequency image processing system able to process an image of the above-mentioned high field frequency at a low cost and in real time.

### (2) Description of the Related Arts

The following prior art publications are known:
Japanese Patent Publication 63-314988;
Japanese Patent Publication 01-173269
Japanese Patent Publication 63-140381 and
Japanese Patent Publication 63-201789.

A conventional low speed TV camera outputs an image consisting of, for example, 30 frames, within one second in a frame expression wherein one frame consists of 480 horizontal lines, or 60 fields within one second in a field expression wherein one field consists of 240 even horizontal lines or 240 odd horizontal lines.

In the motion analyzing system or in the collision experiment analyzing system, which require an image processing at a high frequency, it is necessary to calculate the position of a mark and so forth at a high speed, and it is also necessary to obtain sixty or more fields or thirty or more frames within one second. Accordingly, the above-mentioned conventional low speed TV camera causes a problem in that the output speed there of is too low.

To process an image at a required high speed, the following methods are conventionally used.
(1) a method using a high speed camera, a scanner and an image processing unit;
(2) a method using a high speed TV camera, a high speed VTR and an image processing unit; and
(3) a method using a high speed TV camera and an image processing unit.

Nevertheless, in the above-mentioned conventional technique (1) for example, problems exist in that a real time result is not output, and because the use of expensive film is necessary, the system costs are high.

In the above-mentioned conventional technique (2), a problem arises in that a high speed TV camera is necessary, and since this is a specialized unit, the cost thereof is high. Another problem arises in that a high speed VTR is necessary and since this is also a specialized unit, the cost thereof is high, and further a problem exists in that the results cannot be output in real time.

In the above-mentioned conventional technique (3), problem exists in that a high speed TV camera is necessary, and since this is a specialized unit, the cost thereof is high. Another problem arises in that, since the output of the high speed TV camera, as is, cannot be output to a conventional low speed TV monitor, it is difficult to determine the lens parameters (aperture, zoom, or focus) of the high speed TV camera.

In view of the above-mentioned conventional drawbacks, an object of the present invention is to provide, for processing an image at a high field frequency or high frame frequency, an image processing system which can process an image having a number of times the speed of a TV camera at a low cost and in real time, by picking up a image by a plurality of conventional TV cameras (1/60 seconds/field) which operate in series at different shutter timing, and which have electronic shutters and external synchronization functions.

## SUMMARY OF THE INVENTION

In view of the above-conventional drawbacks, an object of the present invention is to provide, for processing an image at a high field frequency or a high frame frequency, an image processing system which can process an image having a number of times the speed of a TV camera, at a low cost and in real time, by picking up an image by a plurality of conventional low speed TV cameras (1/60 seconds/field) which operate in series at different shutter timings, and which have electronic shutters and external synchronization functions.

To attain the above object, according to the present invention, there is provided a high frequency image processing system for processing an image at a relatively high frequency, comprising: a plurality of TV camera modules each picking up an image at a relatively low scanning frequency lower than 50 frames/second , each having an electronic shutter, an external synchronization signal input terminal, and an image pickup portion. The system further comprises a synchronization signal generating circuit for generating synchronization signals. The phases of the synchronization signals differ from each other, and the synchronization signals are respectively supplied to the external synchronization signal input terminals of the respective TV camera modules. The system further comprises an image processing unit, connected to the TV camera modules and to the synchronization signal generating circuit, for processing the signals output from the respective TV camera modules. The electronic shutters in the plurality of TV camera modules are released, at different times in response to the synchronization signals, to pick up the image and output a plurality of pickup image signals. The image processing unit processes, at different times in response to the synchronization signals, the plurality of pickup image signals respectively output from the plurality of TV camera modules. Thus, after processing the plurality of pickup image signals, the processed pickup image signals as a whole are substantially the same as a signal processed at a relatively high frequency n times higher than said relatively low scanning frequency, where n is equal to the number of TV camera modules.

The relatively low scanning frequency of each of the TV camera modules is a field frequency, and each of the synchronization signals is a field synchronization signal.

Alternatively, the relatively low scanning frequency of each of the TV camera modules may be a frame frequency, and each of the synchronization signals may be a frame synchronization signal.

According to an aspect of the present invention, the system further comprises a single lens assembly for focusing light from the image, and a light distributing unit for distributing light from the image through the single lens assembly to the image pickup portions of the respective TV camera modules.

In the above-mentioned system, the light distributing unit comprises a combination of half mirrors and total reflection mirrors, for distributing incident light to the image pickup portions of the TV camera modules.

Alternatively, the light distributing unit may comprise a movable mirror for distributing incident light to the image pickup portions of the TV camera modules.

The movable mirror comprises: a mirror for reflecting a light received from the lens assembly; and a drive unit, operatively connected to the outputs of the synchronization signal generating circuit, for moving the mirror synchronously with the synchronization signals; the light reflected at the mirror being instantly projected onto the image pickup portion of one of the TV camera modules, before a release of the electronic shutter thereof, and the mirror is held stationary while the electronic shutter is open.

As an alternative to the single lens assembly, according to another aspect of the present invention, the system may comprise a plurality of lens assemblies respectively provided on the image pickup portions of the TV camera modules. In this case, the plurality of the TV camera modules are arranged at almost the same position, and the respective lens assemblies are pointed at almost the same direction, for obtaining the same image pickup signals from the same image.

The image processing unit may comprise a plurality of feature extracting circuits, operatively and respectively connected to the outputs of the TV camera modules, each for extracting a feature in the corresponding pickup image signal; and a plurality of position calculating circuits, operatively and respectively connected to the feature extracting circuits, each for calculating the position of the extracted feature output from the corresponding feature extracting circuit.

Each of the feature extracting circuits may comprise an A/D converter, operatively connected to the output of the corresponding TV camera module, for converting analog signals output from the TV camera module into digital signals; and a color extracting circuit, operatively connected to the outputs of the AD converter, for extracting a pixel having a predetermined color specified in advance.

In the above-mentioned system, the outputs of the TV camera modules are interlaced scanning outputs; and each of the feature extracting circuits further comprises: an interlace converting circuit, connected between the A/D converting circuit and the color extracting circuit, for converting the interlaced image signals received from the A/D converting circuit into noninterlaced signals.

According to still another aspect of the present invention, the image processing unit may comprise a plurality of A/D converters, operatively and respectively connected to the outputs of the TV camera modules, each for converting analog signals of the picked up image output from the corresponding TV camera module into digital signals; XY coordinate generating circuits, operatively and respectively connected to the outputs of the synchronization signal generating circuit, for generating XY coordinates of the picked up images based on the corresponding synchronization signals; image memories, operatively and respectively connected to the corresponding outputs of the A/D converters and to the corresponding outputs of the synchronization signal generating circuit, for storing the digital signals from the corresponding A/D converters by using the synchronization signals as address signals of the image memories; and a processor, operatively connected to the outputs of the image memories, for accessing the image memories at the same time to thereby process the digital signals of the picked up images.

According to still another aspect of the present invention, the image processing unit may comprise a plurality of A/D converters, operatively and respectively connected to the outputs of the TV camera modules, each for converting analog signals of the picked up image output from the corresponding TV camera module into digital signals; XY coordinate generating circuits, operatively and respectively connected to the outputs of the synchronization signal generating circuit, for generating XY coordinates of the picked up images based on the corresponding synchronization signals; a plurality of pairs of image memories, the pairs of image memories being operatively and respectively connected to the corresponding outputs of the A/D converters and to the corresponding outputs of the synchronization signal generating circuit, for storing the digital signals from the corresponding A/D converters by using the synchronization signals as address signals of the image memories; a processor, operatively connected to the outputs of the image memories, for accessing one of each of the pairs of image memories at the same time, to thereby read out the stored digital signals and to process the read digital signals, while the outputs of the A/D converters are input to another one of each pair of the image memories.

According to still another aspect of the present invention, the synchronization signal generating circuit comprises: a reference signal generating circuit, operatively connected to one of the TV camera modules, for generating a reference signal; a plurality of delay circuits, connected in series between the output of the reference signal generating circuit and another one of the TV camera modules, each of the delay circuits delaying the input signal for a predetermined period, and the outputs of the delay circuits and the output of the reference signal generating circuit being respectively connected to the external synchronization terminals of the TV camera modules; whereby external synchronization signals having different phases are generated.

BRIEF DESCRIPTION OF THE DRAWINGS

The above object and features of the present invention will be more apparent from the following description of the preferred embodiments with reference to the accompanying drawings, wherein:
Fig. 1 is a block diagram showing an example of a conventional high frequency image processing system;
Fig. 2 is a block diagram showing another example of a conventional high frequency image processing system;
Fig. 3 is a block diagram showing a high frequency image processing system according to an embodiment of the present invention;
Figs. 4A to 4E are diagrams for explaining the operation of the system shown in Fig. 3;
Fig. 5 is a diagram showing an example of a light distributing unit in the system shown in Fig. 3;
Fig. 6 is a block diagram showing an example of a feature extracting circuit in the system shown in Fig. 4;
Fig. 7 is a block diagram showing an example of a position calculating circuit in the system shown in Fig. 3;
Fig. 8 is a diagram of another example of the light distributing unit in the system shown in Fig. 3;
Figs. 9A to 9D are block diagrams showing an image processing unit according to another embodiment of the present invention; and
Fig. 10 is a diagram showing a lens assembly according to still another embodiment of the present invention.

DESCRIPTION OF THE PREFERRED EMBODIMENTS

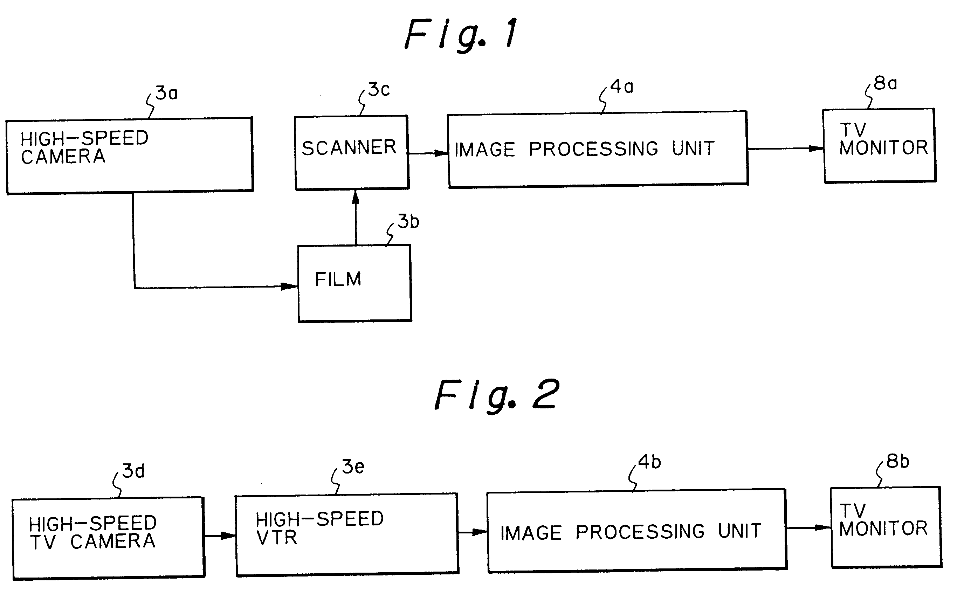

For a better understanding of the present invention, conventional high frequency image processing systems will first be described with reference to Figs. 1 and 2.

Figure 1 is a diagram explaining a conventional high frequency image processing system using a high speed camera. This system uses a high speed camera 3a, a scanner 3c, and a picture image processing unit 4a. In the conventional system shown in Fig. 1, an image on a film 3b picked up by the high speed camera 3a is read by the scanner 3c, and the image is processed by the image processing unit 4.

As previously mentioned, in the conventional system shown in Fig. 1, problems exist in that a real time result is not output and that the use of an expensive film is necessary, and thus the system costs are high.

Figure 2 shows another conventional high frequency image processing system. In this conventional system, a high speed TV camera 3d, a high speed VTR 3e, and an image processing unit 4b are used.

As shown in Fig. 2, an image caught by the high speed TV camera 3d having a high scanning speed of more than 1/60 seconds/field is once stored in the high speed VTR 3e, then the stored image is output from the VTR 3e, at a normal speed of 1/60 seconds/field, and the output image is processed by the image processing unit 4b.

In the conventional system shown in Fig. 2, a problem arises in that the high speed TV camera 3d is necessary, and since this is a specialized unit, the cost thereof is high. Also, a problem exists in that a high speed TVR is necessary, and since this is a specialized unit, the cost thereof is high. Another problem is that the result cannot be output in real time.

In Fig. 2, if the high speed VTR is not used, and only the high speed TV camera 3d and the image processing unit 4b are used, an image caught by the high speed TV camera 3d having a high scanning speed of more than 1/60 seconds/field is directly input to the image processing unit 4b and is processed therein at a high speed.

In the above-mentioned conventional technique, a problem exists in that the high speed TV camera is necessary, and since this is a specialized unit, the cost thereof is high. Also, a problem arises in that, since the output of the high speed TV camera 3d, cannot be displayed as is on a conventional low speed TV monitor, it is difficult to determine the lens parameters (aperture, zoom, or focus) of the high speed TV camera 3d.

The above-mentioned problems of the conventional high frequency image processing systems are solved by the following preferred embodiments of the present invention.

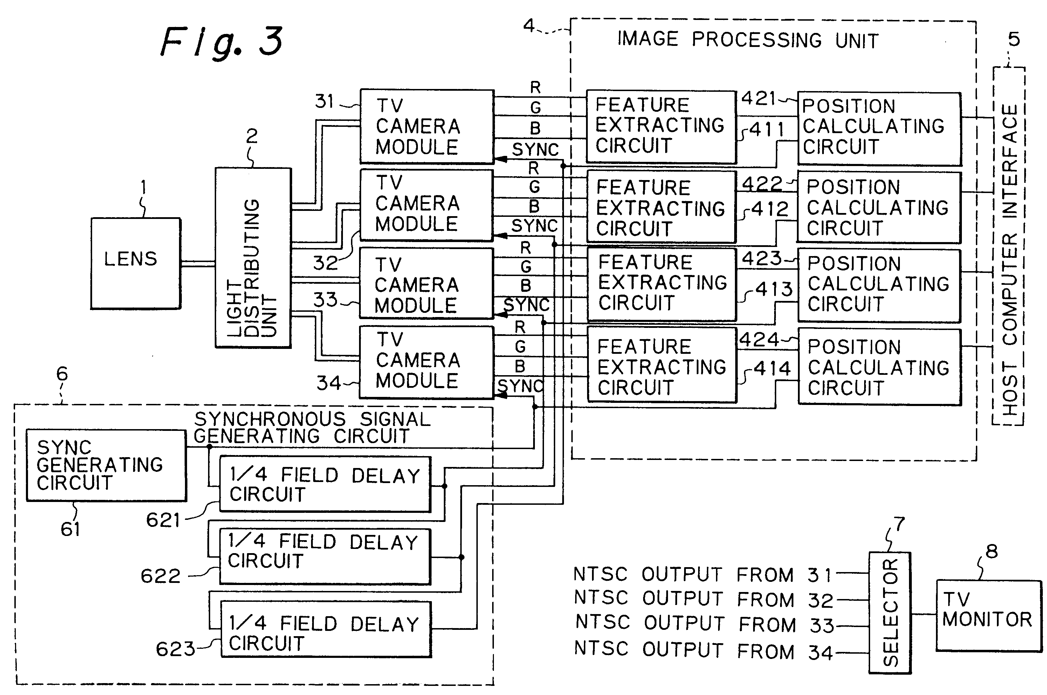

Figure 3 is a block diagram showing a high frequency image processing system according to an embodiment of the present invention. In Fig. 3, the system according to the embodiment of the present invention includes four TV camera modules 31 to 34, for an example, each picking up an image at a relatively low scanning frequency of lower than 50 frames/second. Each of the TV camera modules 31 to 34 may be a conventional TV camera module having a scanning frequency of 30 frames/second or 60 fields/second. Also, each of the TV camera modules 31 to 34 has an electronic shutter, an external synchronization signal input terminal, and an image pickup portion.

The system shown in Fig. 3 further includes a single lens assembly 1 for focusing light from the image, and a light distributing unit 2 for distributing light from the image through the single lens assembly (1) to the image pickup portions of the respective TV camera modules 31 to 34.

The system shown in Fig. 3 further includes a synchronization signal generating circuit 6 for generating four synchronization signals. The phases of the synchronization signals differ from each other, and the synchronization signals are respectively supplied to the external synchronization signal input terminals of the respective TV camera modules 31 to 34. To form the different phase synchronization signals, the synchronization signal generating circuit 6 includes a reference signal generating circuit 61 and three 1/4 field delay circuits 621 to 623. The output of the synchronization signal generating circuit 61 is connected to the external synchronization signal input terminal of the TV camera module 34, and the 1/4 field delay circuits 621 to 623 are connected in series between the output of the reference signal generating circuit 61 and an external synchronization signal input terminal of the TV camera module 31. Each of the 1/4 delay circuits 621 to 623 delays the input signal for 1/4 field, for example. The outputs of the 1/4 field delay circuits 621 to 623 are respectively connected to the external synchronization terminals of the TV camera modules 33, 32 and 31, and thus, external synchronization signals having different phases are generated.

The system shown in Fig. 3 still further includes an image processing unit 4 connected to the outputs of the TV camera modules 31 to 34 and to the outputs of the synchronization signal generating circuit 6. The image processing unit 4 processes the signals output from the respective TV camera modules (31 to 34) in response to the synchronization signals from the synchronization signal generating circuit 6.

The image processing unit 4 includes four feature extracting circuits 411 to 414 respectively connected to the outputs of the TV camera modules 31 to 34. Each of the feature extracting circuits 411 to 414 extracts a predetermined feature from the output signals R, G, and B of the corresponding TV camera module. This predetermined feature is, for example, a portion of the object having a specified color. The image processing unit 4 further includes four position calculating circuits 421 to 424 respectively connected to the outputs of the feature extracting circuits 411 to 414 and to the outputs of the synchronization signal generating circuit 6. Each of the position calculating circuits 421 to 424 calculates the position of the extracted feature output from the corresponding feature extracting circuit.

The electronic shutters in the TV camera modules 31 to 34 are released at different times in response to the synchronization signals, to pick up the image and output four pickup image signals, respectively.

The image processing unit 44 processes, at different times in response to the synchronization signals, the plurality of pickup image signals respectively output from the plurality of TV camera modules 31 to 34 whereby, after processing the plurality of pickup image signals, the processed pickup image signals as a whole are substantially the same as a signal processed at a relatively high frequency n times higher than the relatively low scanning frequency, where n is equal to the number of TV camera modules 31 to 34.

The calculated results are sent through a host computer interface 5 to a host computer (not shown). In the host computer, a selector 7 is provided to select one of the outputs of the TV camera modules 31 to 34 and the NTSC outputs. The selected output is given to the TV monitor 8.

Alternatively, the relatively low scanning frequency of each of the TV camera modules 31 to 34 may be a field frequency, and in this case, each of the synchronization signals will be a field synchronization signal.

Alternatively, The relatively low scanning frequency of each of the TV camera modules 31 to 34 may be a frame frequency, and in this case, each of the synchronization signals will be a frame synchronization signal.

During operation, as shown in Fig. 3, light from the lens assembly 1 is distributed by the light-distributing unit 2 such as a prism to reach the image pickup surfaces on the respective TV camera modules 31 to 34.

From the synchronization signal generating circuit 6, the synchronization signals having different phases are applied to the respective TV camera modules 31 to 34 and then, in accordance with the synchronization signals, pickup images are output from the TV camera modules. The electronic shutters of the TV camera modules 31 to 34 are opened or closed synchronously with the external synchronization signals SYNC. Note, instead of the synchronization signals SYNC generated by the synchronization signal generating circuit 6, a horizontal synchronization signal (HD) or a vertical synchronization signal (VD) for each of the TV camera modules 31 to 34 may be used.

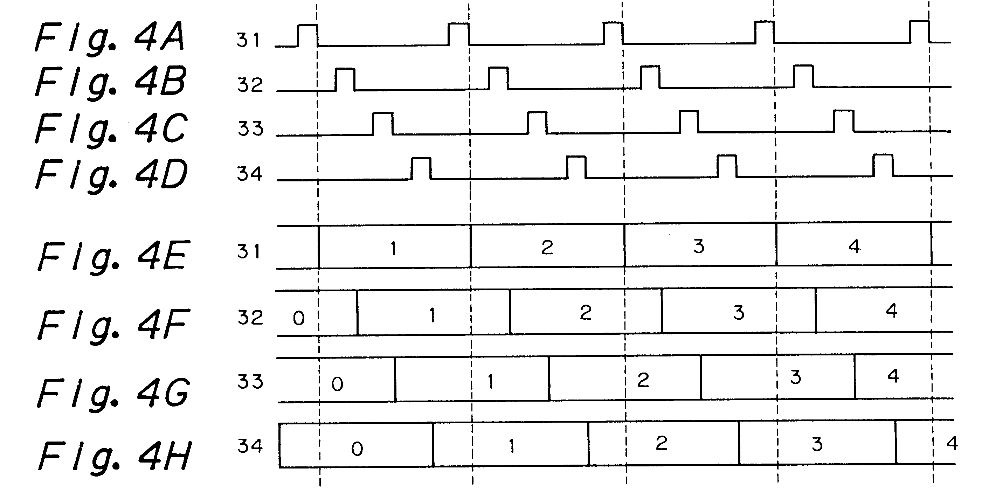

When four TV camera modules are used, the timings of the opening and closing of the electronic shutters and the outputs of the picked up images are as shown in Figs. 4A to 4E. In this case, since each of the TV camera modules outputs picked up images of 60 fields per second, images of 240 fields per second are input to image processing unit 4.

In the image processing unit 4, one moving image processing module is provided to correspond to one TV camera module. Accordingly, if the calculating speed of the moving image processing module is 1/60 seconds/field, image fields of (60× the number of TV cameras) can be processed within one second.

In the processing of the moving images, certain features of the image of the object to be picked up are fixed, and positions in the images are calculated. These features are, for example, there are a high brightness, a certain specified color, a certain shape, and so forth. To calculate the positions of the extracted features, there are known a method of obtaining horizontal and vertical projections and calculating the position of the object by the projections, and a method of calculating the position of the object by the vertical and horizontal coordinates on the picked up image of the extracted pixels.

Also, the image processing unit 4 is provided with a selector 7 for selecting one of the input signals from the TV camera modules 31 to 34, whereby the image is displayed on the TV monitor so that the lens parameters such as the aperture, zoom, or focus can be easily determined.

Thus, according to the above-described embodiment of the present invention, by using the conventional TV camera modules having a relatively low scanning frequency of 1/60 second/field or 1/30 second/frame, it is possible to input images at a high field frequency or high frame frequency, or at 1/240 second/field or 1/120 second/frame, which is the number of times of the field or frame frequency thereof, this number being equal to the number of TV camera modules 31 to 34, and thus it is possible to output the process result in real time. Further, since conventional TV camera modules can be used, the system can be constructed at low cost. Furthermore, since the image can be displayed on conventional TV monitors, an advantage is obtained in that an adjustment of the lens parameters such as the aperture, zoom, or focus is relatively easy.

The embodiment of the present invention will be further described in more detail in the following.

In Fig. 3, the light obtained from the single lens assembly 1 is distributed by the light distributing unit 2, for projecting the light into image picking up elements (CCD) in the four TV camera modules 31 to 34 having electronic shutters, RGB outputs, and NTSC outputs, whereby, the same optical image pictures are always obtained at the above-mentioned image pickup elements in the four TV camera modules 31 to 34.

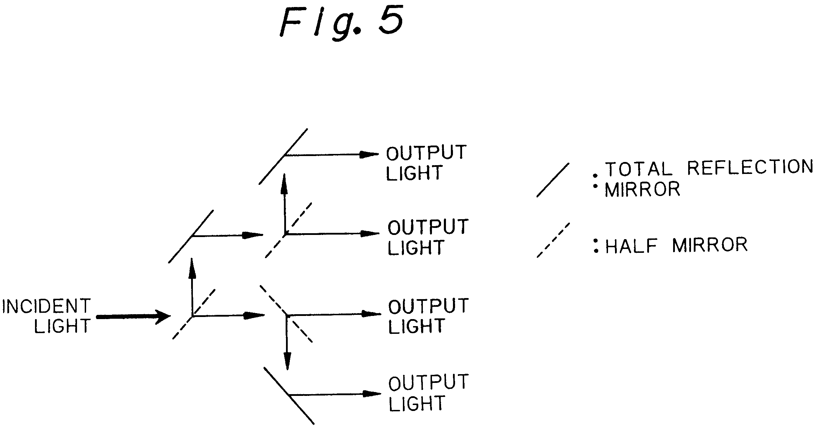

An example of the structure of the light distributing unit 2 is shown in Fig. 5. In the figure, each of the half-mirrors passes about 50 % of the incident light, and reflects the remaining about 50 %. Namely, the reflection mirrors as a whole in the figure each reflect 100 % of the incident light. Therefore, by constructing the light distributing unit 2 as shown in Fig. 5, an image from the lens assembly 1 can be input to the four TV camera modules 31 to 34.

In the synchronization signal generating circuit 6, the field synchronization signals SYNC, for example, having different phases are generated for an external synchronization of the four TV camera modules 31 to 34, at different timings.

Namely, first, in the reference synchronization signal generating circuit 61 (hereinafter referred to as a SYNC generating circuit 61), the SYNC signal, which is the basis of the external synchronization signals, is generated, and then the output signal from the SYNC generating circuit 61 is output to the external synchronization signal input terminal of the TV camera module 34. Also, the output signal of the SYNC generating circuit 61 is input to the 1/4 field delay circuit 621, to delay the input signal by 1/4 fields, and the output of the 1/4 field delay circuit 621 is input to the external synchronization signal input terminal of the TV camera module 33. Further, the output signal of the delay circuit 621 is input to the 1/4 field delay circuit 622, and the output thereof is input to the external synchronization signal input terminal of the TV camera module 32. Similarly, the output signal of the 1/4 field delay circuit 622 is input to a 1/4 field delay circuit 623, and the output thereof is input to the external synchronization signal input terminal of the TV camera module 31.

In the above-described embodiment, the field synchronization signal is generated as an example.

When the electronic shutter in each of the TV camera modules 31 to 34 operates in synchronization with the frame synchronization signal, however, the above-mentioned SYNC generating circuit 61 is constructed to generate a frame synchronization signal.

The TV camera modules 31 to 34 output analog image signals (R, G, B and NTSC), in accordance with the respectively given SYNC signals. A time chart of these analog image signals is as shown in Figs. 4A to 4D.

In the image processing unit 4, the above-mentioned analog RGB signals are respectively input to the feature extracting circuits 411 to 414.

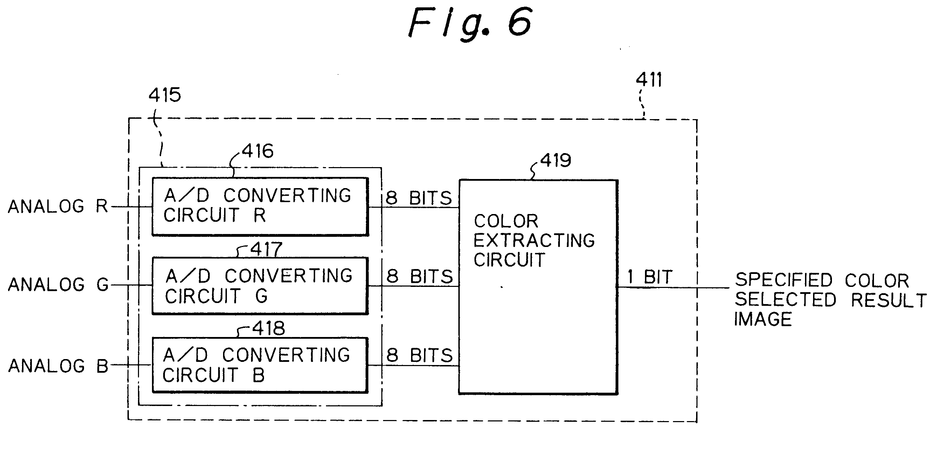

Figure 6 shows an example of the feature extracting circuit 411 for extracting a color. The other feature extracting circuits 412 to 414 are the same as the circuit shown in Fig. 6. In Fig. 6, the feature extracting circuit 411 includes an A/D converter 415 consisting of three A/D converting circuits 416 to 418, and a color extracting circuit 419. The input analog RGB signals are respectively digitized into 8 bits by the three A/D converting circuits 416 to 418, and only a picture element having a specified color is output as a logic "1" (the other portions are logic "0") from the color extracting circuit 419.

For the above-mentioned color extracting circuit 419, the technique disclosed in Japanese Unexamined Patent Publication 63-314988 "Video Rate Color Extracting Unit", filed by the same applicant, is used. In the color extracting circuit 419, the digital RGB signals from the A/D converting circuits 416 to 418 are converted by a predetermined table (look-up table) given in advance, whereby a pixel of a predetermined color is extracted.

Referring again to Fig. 3, the selected result of the specified color, which is the output of the above-mentioned feature extracting circuit 411, and the SYNC signal, which is the output of the above-mentioned 1/4 field delay circuit 623, are input to the position calculating circuit 421; the selected result of the specified color, which is the output of the above-mentioned feature extracting circuit 412, and the SYNC signal, which is the output of the above-mentioned 1/4 field delay circuit 622, are input to the position calculating circuit 422; the selected result of the specified color, which is the output of the above-mentioned feature extracting circuit 413, and the SYNC signal, which is the output of the above-mentioned 1/4 field delay circuit 621, are input to the position calculating circuit 423; and the selected result of the specified color, which is the output of the above-mentioned feature extracting circuit 414, and the SYNC signal, which is the output of the above-mentioned SYNC generating circuit 61, are input to the position calculating circuit 424.

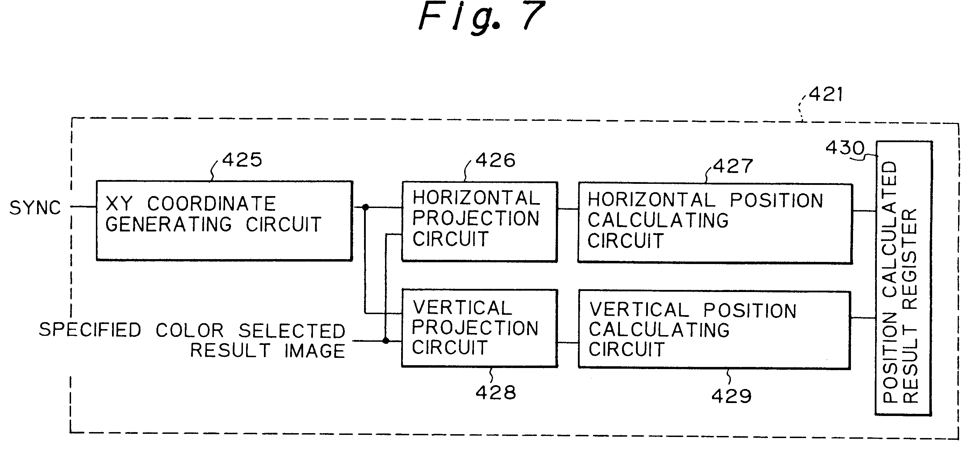

Figure 7 shows a construction of the position calculating circuit 421; the other position calculating circuits 422 to 424 each have the same construction as the circuit 421.

In Fig. 7, the position calculating circuit 421 includes an XY coordinate generating circuit 425, a horizontal projection circuit 426, a horizontal position calculating circuit 427, a vertical projection circuit 428, a vertical position calculating circuit 429, and a position calculating result register 430.

In the position calculating circuit 421, the SYNC signal, which is the output of the 1/4 field delay circuit 623, is input to the XY coordinate generating circuit 425.

In the XY coordinate generating circuit 425, each horizontal line of the above-mentioned SYNC signal is divided by a sampling clock of the above-mentioned A/D converting circuit 415 (see Fig. 6), to thereby generate a X coordinate of the image, and each horizontal line is counted to generate a Y coordinate of the image. In a horizontal projection circuit 426, the XY coordinates, which are the outputs of the above-mentioned XY coordinate generating circuit 425, and the specified color selected result image, which is the output of the above-mentioned feature extracting circuit 411, are input so that a horizontal projection, which is the total sum of the horizontal lines of the image, is output therefrom. In a vertical projection circuit 428, the XY coordinates, which are the outputs of the above-mentioned XY coordinate generating circuit 425, and the specified color selected result image, which is the output of the above-mentioned feature extracting circuit 411, are input so that a vertical projection, which is the total sum of the vertical lines of the image, is output therefrom.

In a horizontal position calculating circuit 427, the position in the X direction of the image of the extracted feature is calculated based on the horizontal projection which is the output of the above-mentioned horizontal projection circuit 426, and the result is stored in a position in the X direction of the position result register 430. Also, in a vertical position calculating circuit 429, the position in the Y direction of the image of the extracted feature is calculated based on the vertical projection which is the output of the above-mentioned vertical projection circuit 428, and the result is stored in a position in the Y direction of the position result register 430. Also, after the position calculations are finished, calculation completion flags, not shown in the figure, are turned ON.

In the above-mentioned position calculating circuits 421 to 424, a technique disclosed in, for example, Japanese Unexamined Patent Publication 01-173269 "Colored Object Position Automatic Measuring Apparatus" is used. The "Colored Object Position Automatic Measuring Apparatus" is used for repeating the processes of receiving red (R), green(G) and blue (B) signals obtained from a color television image, extracting a pixel having a color specified in advance by a host computer, processing the color data to convert same into a binary signal, obtaining projected results in the horizontal and vertical directions of the image for each frame, and determining the position of the specified colored object by the host computer based on the projected results data for each frame, whereby the position of the object having the color is measured automatically and at a video rate.

Also, in the above-mentioned horizontal projection circuit 426, a technique disclosed in, for example Japanese Unexamined Patent Publication 63-140381 "Video Rate Projection Calculating Circuit" is used. The "Video Rate Projection Calculating Circuit" is used for obtaining projection data which is the sum of pixel values in the horizontal direction in a specified region in a given image, in the form of digital video signals, and has two memories, one of which is used for storing a projection result, and the other of which is used for reading out to an external unit. These two memories are used alternatively, and thus the projection results in the horizontal direction can be output at the video rate.

Further, in the above-mentioned vertical projection circuit 428, a technique disclosed in, for example, Japanese Unexamined Patent Publication 63-201789 "Video Rate Projection Calculating Circuit" is used . The "Video Rate Projection Calculating Circuit" is used for obtaining projection data which is the sum of pixel values in the vertical direction in a specified region in a given image, in the form of digital video signals, and the circuit is in principle the same as the above-mentioned horizontal projection circuit 421.

Referring again to Fig. 3, the host computer interface 5 is used for passing the output results from the position calculating circuits 421 to 424 to the not-shown host computer.

The selector 7 receives the output from a not-shown image synthesising output circuit and the NTSC outputs from the TV camera modules 31 to 34, and selects one thereof each time, to be output to the TV monitor 8.

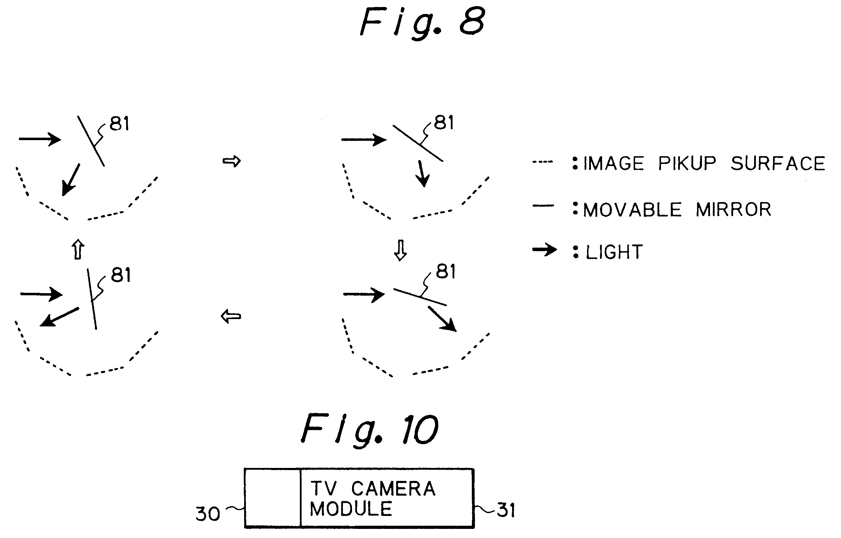

Figure 8 shows another embodiment in which, as the above-mentioned light distributing unit 2, a movable mirror 81 is used for distributing incident light to the image pickup portions on the TV camera modules, instead of the combination of the half mirrors and total reflection mirrors shown in Fig. 5. In the case shown in Fig. 8, by rotating the movable mirror 81, light is made incident on the four TV camera modules 31 to 34.

It should be noted that the movable mirror 81 is rotated synchronously with the external synchronization signal in such a way that, immediately before opening one of the TV camera modules 31 to 34, the light is made incident on the image pickup surface thereof; and while the electronic shutter is open, the movable mirror is kept stationary.

In more detail, the movable mirror 81 includes a mirror for reflecting a light received from the lens assembly 1, and a drive unit (not shown in the figure) connected to the outputs of the synchronization signal generating circuit 6, for moving the mirror synchronously with the synchronization signals. The light reflected at the mirror is instantly projected, onto the image pickup portion of one of the TV camera modules 31 to 34, before the release of the electronic shutter, and the mirror is kept stationary while the electronic shutter is open.

The above-mentioned arrangement allows, similar effects to those of the before-mentioned light distributing unit 2 to be obtained.

According to still another embodiment of the present invention, instead of providing the single lens assembly 1, the system may include a plurality of lens assemblies respectively provided at the image pickup portions in the TV camera modules 31 to 34. In this case, the plurality of TV camera modules 31 to 34 are arranged at almost the same position, and the respective lens assemblies are pointed in almost the same direction, to thereby the same image pickup signals from the same image.

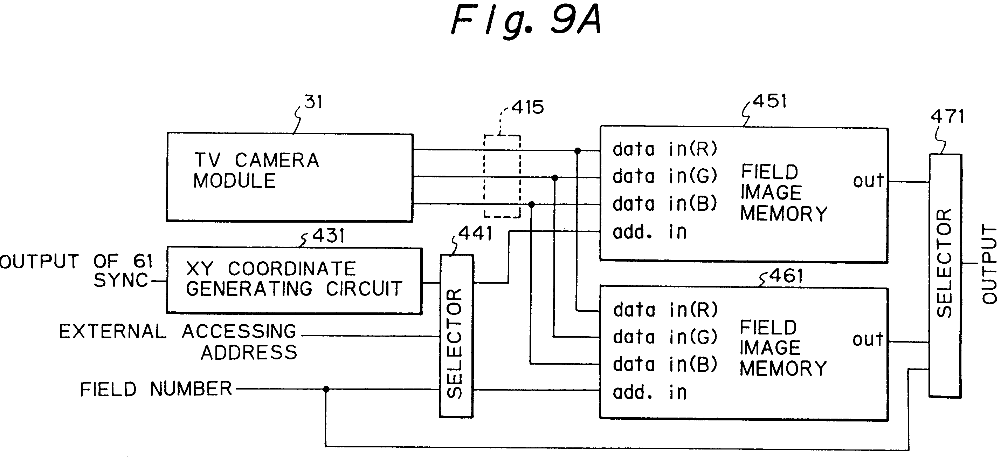

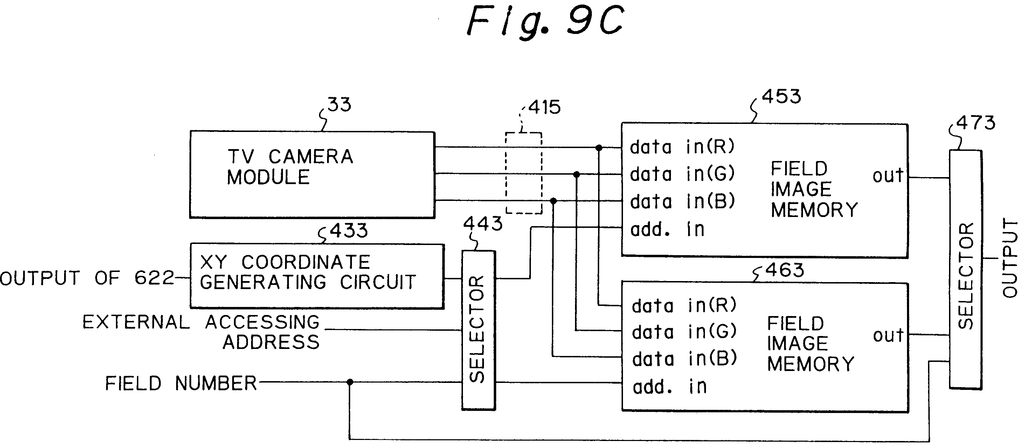

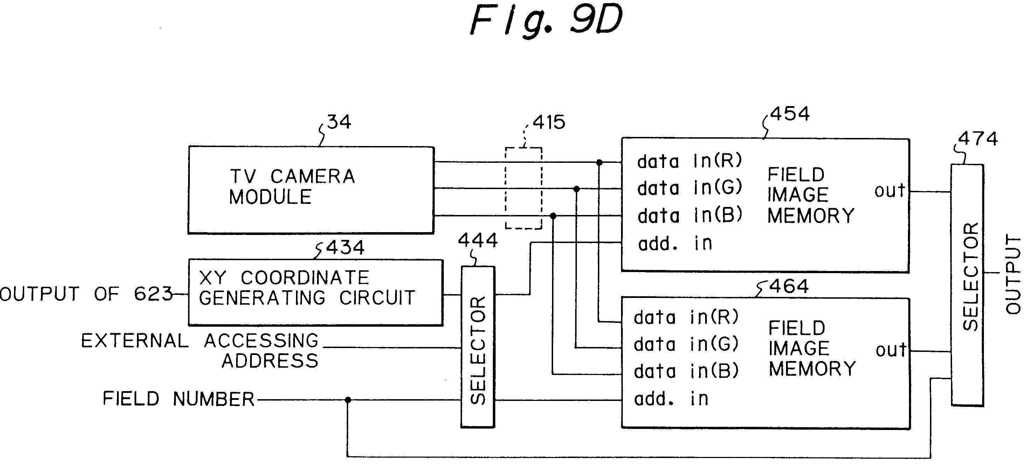

Next, still another embodiment of the image processing unit 4 is shown in Figs. 9A to 9D.

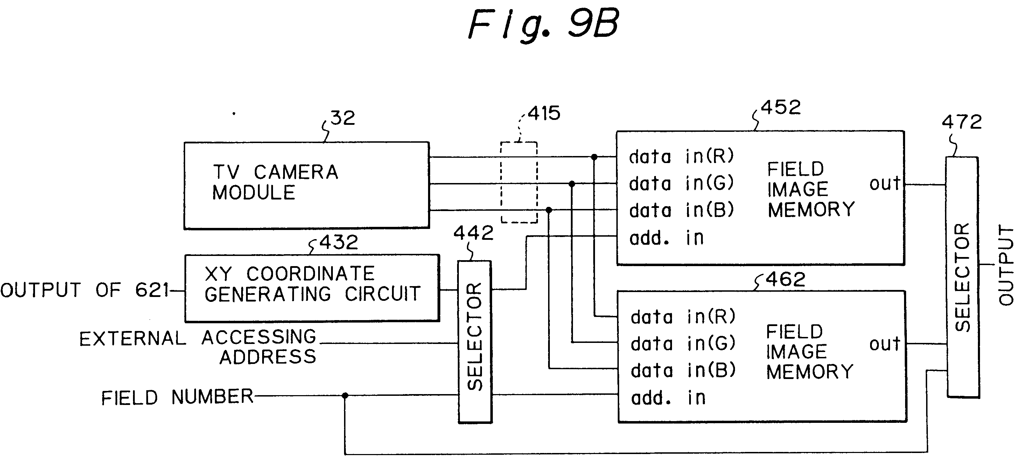

Figure 9A shows a block diagram of a part of the image processing unit 4 operatively connected to the TV camera module 31. The other parts of the image processing unit 4 respectively connected to the TV camera modules 32 to 34 are substantially the same as the part shown in Fig. 9A, and are respectively shown in Figs. 9B to 9C.

The part shown in Fig. 9A includes an A/D converter 415 connected to the output of the TV camera module 31. The A/D converter 415 converts analog signals of the picked up image output from the TV camera module 31 into digital signals. The part shown in Fig. 9A further includes an XY coordinate generating circuit 431 connected to the output of the reference signal generating circuit 61, for generating XY coordinates of the picked up image based on the reference signal. The part shown in Fig. 9A further includes a pair of field image memories 451 and 461, each of the field image memories 451 and 461 having data inputs R, G, and B and an address input. The data inputs of the field image memories 451 and 461 are connected to the outputs of the A/D converter 415, and the address inputs of the field image memories 451 and 461 are connected to outputs of a selector 441. The pair of field image memories 451 and 461 store the digital signals from the A/D converter 415 by using the synchronization signal as the address signal of the field memories.

Also provided is a processor is (not shown in Figs. 9A to 9D) operatively connected to the outputs of the image memories 451 to 454 and 461 to 464, for accessing one of each of the pairs of the field image memories at the same time, to thus read out the stored digital signals and to process the read digital signals, while the outputs of the A/D converters 415

are input into another one of each pair of the field image memories.

In the operation of the image processing unit shown in Figs. 9A to 9D, first the XY coordinate generating circuits 431 to 434 receive the outputs of 1/4 field delay circuits 621 to 624, and then generate XY coordinates of a field image, for example, in response to each synchronization signal.

Two sets of field image memories are provided for each of the A/D converters 415, and the image processing is carried out in such a way that, while one of the sets of field image memories 451 and 461 receives the image from the TV camera module 31 by using the XY coordinates as the write accessing address, the other of the sets of field image memories 451 and 461 is accessed by an external accessing address. For this purpose, selectors 441 to 444 are provided for changing, at each field, the address given to each of the field image memories 451 to 454 and 461 to 464.

Regarding the part shown in Fig. 9A, the operation of the image process for one image input, as an example, is described as follows.

First, the selector 441 receives an accessing address from an external world, the output of the XY coordinate generating circuit 431, and the least significant bit of the field number. In a certain field, the external accessing address is input to the address input of the field image memory 451, and the output of the XY coordinate generating circuit 431 is input to the address input of the field image memory 461. In the next field, the output of the XY coordinate generating circuit 431 is input to the address input of the field image memory 451, and the external accessing address is input to the address input of the field image memory 461. Also, a write enable signal is input to only the field image memory which receives the output of the XY coordinate generating circuit 431.

RGB digital signals, obtained by A/D converting the output of the TV camera module 31, are input to the data inputs of the field image memories 451 and 461, and the selector 471 then operates in such a way that it receives the memory outputs of the field image memories 451 and 461, and the field number, and selects and outputs, to an external unit, the processed image output from the field image memory which is being accessed by the external unit in accordance with the field number.

Accordingly, while one of the sets of the field image memories 451 and 461 receives the image data from the TV camera module 31, the contents of the other set of the field image memories 451 and 461 are read out in accordance with the external accessing address, and the read contents are subjected to an image processing and are output to the external unit.

In this case, when a not shown processor can process an image of the one set of field image memories 451 and 461, the image processing can be carried out for continuous fields.

In the above-described embodiments, the description is of an example in which the number of field image memories 451 to 454 and 461 to 464 is twice the number of TV camera modules 31 to 34, but it is of course possible for the number of the field image memories to be the same as the number of TV camera modules 31 to 34. This construction also allows a number of fields to be processed, where the number of fields is the same as the number of TV camera modules 31 to 34.

According to still another embodiment, if a field image can be processed within the vertical blanking periods, continuous fields can be processed, and conversely, if it is impossible to process a filed image within the vertical blanking period, continuous fields cannot be processed.

In the above-described embodiments shown in Fig. 3 to Figs. 9A to 9D, an example is given in which the image from the single lens assembly 1 is input to the four TV camera modules 31 to 34 by the light distributing unit 2 or by rotating the movable mirror, but it is apparent that, by providing individual lens assemblies 30 in the image pick-up portions of the respective TV camera modules 31 to 34, as shown in Fig. 10, and by arranging the plurality of TV camera modules 31 to 34 at substantially the same position so that the above-mentioned lens assemblies 30 are pointed in the same direction, the same effects can be obtained as obtained in the above-described embodiments by providing a single lens assembly and by distributing the light.

Further, in the above-described embodiments, the TV camera modules 31 to 34 are provided with electronic shutters, but these electronic shutters may be field shutters which carry out shutter operations at each field synchronous with the field synchronization signal, or may be frame shutters which carry out shutter operations at each frame synchronous with the frame synchronization signal.

Still further, when the TV camera modules are equipped with the above-mentioned frame shutters, an interlace or noninterlace frame scanning method can be used.

Accordingly, when the outputs of the TV camera modules 31 to 34 are not an interlace scanning output, i.e., are a noninterlace output, no specific problem exists, but when the outputs of the TV camera modules 31 to 34 are interlace scanning outputs, i.e., are an interlace output, as in the embodiment shown in Fig. 6, for example, interlace converting circuits must be inserted between the A/D converting circuits 416 to 418 and the color extracting circuit 419.

As described above in detail, in the high frequency image processing system according to the present invention, a plurality of field/ frame image data from a plurality of conventional TV camera modules with electronic shutters and with external synchronization signals synchronized at different timings are input to process an image at a speed of a number of times the speed of a TV camera modules, this number being equal to the number of TV camera modules. Therefore, by using a plurality of TV camera modules, an image can be input at a field frequency or a frame frequency which is a number of times of the field frequency or the frame frequency of each TV camera module, this number being equal to the number of TV camera modules, the number of times a processing of the field/frame image is possible, this number being the same as the number of the TV camera modules, and the result can be output in real time. Further, since conventional TV camera modules are used, the system can be constructed at a low cost, Since the image is displayed by a conventional TV monitor, the adjustment of the lens parameters (aperture, zoom, or focus) of the TV camera modules is made easy, and thus the operability is improved.

**Claims**

1.  A high frequency image processing system for processing an image at a relatively high frequency, comprising:

    a plurality (n) of TV camera modules (31 to 34) each picking up an image at a relatively low scanning frequency lower than 50 frames/second , and each having an electronic shutter, an external synchronization signal input terminal, and an image pickup portion;

    a synchronization signal generating circuit (6) for generating synchronization signals, the phases of the synchronization signals being different to each other, and the synchronization signals being respectively supplied to the external synchronization signal input terminals of the respective TV camera modules (31 to 34); and

    an image processing unit (4), connected to the TV camera modules (31 to 34) and to the synchronization signal generating circuit (6), for processing the signals output from the respective TV camera modules (31 to 34);

    the electronic shutters in the plurality of TV camera modules (31 to 34) being released at different times in response to the synchronization signals, to pick up the image and output a plurality of pickup image signals; and

    the image processing unit (4) processing, at different times in response to the synchronization signals, the plurality of pickup image signals respectively output from the plurality of TV camera modules (31 to 34);

    whereby, after processing the plurality of pickup image signals, the processed pickup image signals as a whole are substantially the same as a signal processed at a relatively high frequency n times higher than the relatively low scanning frequency, where n is equal to the number of TV camera modules (31 to 34).

2.  A high frequency image processing system as claimed in claim 1, wherein the relatively low scanning frequency of each of the TV camera modules (31 to 34) is a field frequency, and each of the synchronization signals is a field synchronization signal.

3.  A high frequency image processing system as claimed in claim 1, wherein the relatively low scanning frequency of each of the TV camera modules (31 to 34) is a frame frequency, and each of the synchronization signals is a frame synchronization signal.

4.  A high frequency image processing system as claimed in claim 1, further comprising:

    a single lens assembly (1) for focusing light from the image; and

    a light distributing unit (2) for distributing light from the image through the single lens assembly (1) to the image pickup portions at the respective TV camera modules (31 to 34).

5.  A high frequency image processing system as claimed in claim 4, wherein the light distributing unit (2) comprises a combination of half mirrors and total reflection mirrors for distributing incident light to the image pickup portions at the TV camera modules.

6.  A high frequency image processing system as claimed in claim 5, wherein the light distributing unit (2) comprises a movable mirror for distributing incident light to the image pickup portions at the TV camera modules.

7.  A high frequency image processing system as claimed in claim 6, wherein the movable mirror comprises:

    a mirror for reflecting light received from the lens assembly (1); and

    a drive means, operatively connected to the outputs of the synchronization signal generating circuit (6), for moving the mirror synchronously with the synchronization signals;

    the light reflected at the mirror being instantly projected onto the image pickup portion of one of the TV camera modules (31 to 34) before a release of the electronic shutter, the mirror being kept stationary while the electronic shutter is open.

8.  A high frequency image processing system as claimed in claim 1, further comprising:

a plurality of lens assemblies respectively provided at the image pickup portions in the TV camera modules (31 to 34);

the plurality of the TV camera modules being arranged at almost the same position, and the respective lens assemblies being pointed in almost the same direction, for obtaining the same image pickup signals from the same image.

9. A high frequency image processing system as claimed in claim 1, wherein the image processing unit (4) comprises:

a plurality of feature extracting circuits (411 to 414), operatively and respectively connected to the outputs of the TV camera modules (31 to 34), each extracting a feature in the corresponding pickup image signal; and

a plurality of position calculating circuits (421 to 424), operatively and respectively connected to the feature extracting circuits (411 to 414), for calculating the position of the extracted feature output from the corresponding feature extracting circuit.

10. A high frequency image processing system as claimed in claim 9, wherein each of the feature extracting circuits (411 to 414) comprises:

an A/D converter (415), operatively connected to the output of the corresponding TV camera module, for converting analog signals output from the TV camera module into digital signals; and

a color extracting circuit (419), operatively connected to the outputs of the AD converter (415), for extracting a pixel having a predetermined color specified in advance.

11. A high frequency image processing system as claimed in claim 10, wherein:

the outputs of the TV camera modules (31 to 34) are interlaced scanning outputs; and

each of the feature extracting circuits (411 to 414) further comprises:

an interlace converting circuit, connected between the A/D converting circuit and the color extracting circuit, for converting the interlaced image signals received from the A/D converting circuit into noninterlaced signals.

12. A high frequency image processing system as claimed in claim 1, wherein the image processing unit (1) comprises:

a plurality of A/D converters (415), operatively and respectively connected to the outputs of the TV camera modules, for converting analog signals of the picked up image output from the corresponding TV camera module into digital signals;

XY coordinate generating circuits (431 to 434), operatively and respectively connected to the outputs of the synchronization signal generating circuit (6), for generating XY coordinates of the picked up images based on the corresponding synchronization signals;

image memories (451 to 454), operatively and respectively connected to the corresponding outputs of the A/D converters (415) and to the corresponding outputs of the synchronization signal generating circuit (6), for storing digital signals from the corresponding A/D converters (415) by using the synchronization signals as address signals of the image memories;

a processor, operatively connected to the outputs of the image memories (451 to 454), for accessing the image memories at the same time, to thereby process the digital signals of the picked up images.

13. A high frequency image processing system as claimed in claim 1, wherein the image processing unit (1) comprises:

a plurality of A/D converters (415), operatively and respectively connected to the outputs of the TV camera modules, for converting analog signals of the picked up image output from the corresponding TV camera module into digital signals;

XY coordinate generating circuits (431 to 434), operatively and respectively connected to the outputs of the synchronization signal generating circuit (6), for generating XY coordinates of the picked up images based on the corresponding synchronization signals;

a plurality of pairs of image memories (451 to 454 and 461 to 464), the pairs being operatively and respectively connected to the corresponding outputs of the A/D converters (415) and to the corresponding outputs of the synchronization signal generating circuit (6), for storing digital signals from the corresponding A/D converters (415) by using the synchronization signals as address signals of the image memories;

a processor, operatively connected to the outputs of the image memories (451 to 454 and 461 to 464), for accessing one of each of the pairs of the image memories at the same time to read out the stored digital signals and to process the read digital signals, while the outputs of the A/D converters (415) are input into another one of each pair of the image memories.

14. A high frequency image processing system as claimed in claims 1, wherein the synchronization signal generating circuit (6) comprises:

a reference signal generating circuit (61), operatively connected to one of the TV camera modules (31 to 34), for generating a reference signal;

a plurality of delay circuits, connected in series between the output of the reference signal generating circuit (61) and another one of the TV camera modules (31 o 34), each of the delay circuits delaying the input signal for a predetermined period, and the outputs of the delay circuits and the output of the reference signal generating circuit being respectively connected to the external synchronization terminals of the TV camera modules (31 to 34);

whereby external synchronization signals having different phases are generated.

## Fig. 1

```
     3a                      3c                    4a                        8a
HIGH-SPEED          →    SCANNER    →   IMAGE PROCESSING UNIT    →      TV
CAMERA                      ↑                                         MONITOR
   │                        │
   │                      3b
   └──────────→          FILM
```

HIGH-SPEED CAMERA  — 3a

SCANNER — 3c

IMAGE PROCESSING UNIT — 4a

TV MONITOR — 8a

FILM — 3b

## Fig. 2

```
     3d                    3e                      4b                       8b
HIGH-SPEED     →    HIGH-SPEED     →   IMAGE PROCESSING UNIT   →       TV
TV CAMERA            VTR                                             MONITOR
```

HIGH-SPEED TV CAMERA — 3d

HIGH-SPEED VTR — 3e

IMAGE PROCESSING UNIT — 4b

TV MONITOR — 8b

EP 0 474 483 A2

## Fig. 3

EP 0 474 483 A2

*F l g. 4A*  31

*F l g. 4B*  32

*F l g. 4C*  33

*F l g. 4D*  34

*F l g. 4E*  31

*F l g. 4F*  32

*F l g. 4G*  33

*F l g. 4H*  34

EP 0 474 483 A2

# Fig. 5

OUTPUT LIGHT

OUTPUT LIGHT

INCIDENT LIGHT

OUTPUT LIGHT

OUTPUT LIGHT

/ : TOTAL REFLECTION MIRROR

/ : HALF MIRROR

# Fig. 6

EP 0 474 483 A2

ANALOG R ——→ | A/D CONVERTING CIRCUIT R | —8 BITS—→ | COLOR EXTRACTING CIRCUIT |

ANALOG G ——→ | A/D CONVERTING CIRCUIT G | —8 BITS—→

ANALOG B ——→ | A/D CONVERTING CIRCUIT B | —8 BITS—→

—1 BIT—→ SPECIFIED COLOR SELECTED RESULT IMAGE

415
411
416
419
417
418

# Fig. 7

EP 0 474 483 A2

```
                                                                        ,421
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
                                                              430
             425                426               427          ┌──────┐
       ┌──────────────┐    ┌──────────┐    ┌──────────────┐    │      │
SYNC   │ XY COORDINATE│    │HORIZONTAL│    │HORIZONTAL POSITION│  │ P C │
───────│ GENERATING   │────│PROJECTION│────│CALCULATING   │────│ O A │
       │ CIRCUIT      │    │CIRCUIT   │    │CIRCUIT       │    │ S L │
       └──────────────┘    └──────────┘    └──────────────┘    │ I C │
                                                              │ T U │
                                                              │ I L │
                          ┌──────────┐    ┌──────────────┐    │ O A │
SPECIFIED COLOR SELECTED  │VERTICAL  │    │VERTICAL POSITION│  │ N T │
       RESULT IMAGE ──────│PROJECTION│────│CALCULATING   │────│ E R │
                          │CIRCUIT   │    │CIRCUIT       │    │ D E │
                          └──────────┘    └──────────────┘    └──────┘
                             428             429
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
```

SYNC — XY COORDINATE GENERATING CIRCUIT (425) — HORIZONTAL PROJECTION CIRCUIT (426) — HORIZONTAL POSITION CALCULATING CIRCUIT (427)

SPECIFIED COLOR SELECTED RESULT IMAGE — VERTICAL PROJECTION CIRCUIT (428) — VERTICAL POSITION CALCULATING CIRCUIT (429)

POSITION CALCULATED RESULT REGISTER (430)

421

# Fig. 8

···· : IMAGE PIKUP SURFACE

— : MOVABLE MIRROR

→ : LIGHT

# Fig. 10

TV CAMERA MODULE

# Fig. 9A

TV CAMERA MODULE `31`

XY COORDINATE GENERATING CIRCUIT `431`

OUTPUT OF 61 SYNC

EXTERNAL ACCESSING ADDRESS

FIELD NUMBER

SELECTOR `441`

`415`

FIELD IMAGE MEMORY `451`
- data in(R)
- data in(G)
- data in(B)
- add. in
- out

FIELD IMAGE MEMORY `461`
- data in(R)
- data in(G)
- data in(B)
- add. in
- out

SELECTOR `471`

OUTPUT

EP 0 474 483 A2

# Fig. 9B

EP 0 474 483 A2

# Fig. 9C

EP 0 474 483 A2

# Fig. 9D

TV CAMERA MODULE — 34

XY COORDINATE GENERATING CIRCUIT — 434

OUTPUT OF 623

EXTERNAL ACCESSING ADDRESS

FIELD NUMBER

SELECTOR — 444

415

FIELD IMAGE MEMORY — 454

data In(R)
data In(G)
data In(B)
add. in
out

FIELD IMAGE MEMORY — 464

data in(R)
data in(G)
data in(B)
add. in
out

SELECTOR — 474

OUTPUT

EP 0 474 483 A2